# EUROPEAN PATENT APPLICATION

(11) **EP 2 906 007 A1**
(43) Date of publication of application: **12.08.2015**
(21) Application number: 13844151.4
(22) Date of filing: 10.09.2013
(51) Int. Cl.: H04W 72/04

(54) **MOBILE STATION AND WIRELESS BASE STATION**

(30) Priority: 04.10.2012 JP 2012222251; 08.02.2013 JP 2013023464
(71) Applicant: NTT DOCOMO, INC., Chiyoda-ku Tokyo 100-6150 (JP)
(72) Inventor: UCHINO, Tooru, Tokyo 100-6150 (JP); SAGAE, Yuta, Tokyo 100-6150 (JP); KIYOSHIMA, Kohei, Tokyo 100-6150 (JP); TAKEDA, Kazuaki, Tokyo 100-6150 (JP)
(74) Representative: Hoffmann Eitle
(86) International application number: PCT/JP2013/074298
(87) International publication number: WO 2014/054386

(57) **Abstract**

In CA performed using multiple cells supporting PUCCH, which downlink cell feedback information is to be transmitted through which uplink cell PUCCH is determined. A mobile station UE according to the invention includes a management unit 21 configured to manage a downlink cell and an uplink cell in association with each other and a transmission unit 23 configured to transmit feedback information for a signal, which is transmitted through the downlink cell, through PUCCH for the uplink cell associated with the downlink cell.

## Description

### TECHNICAL FIELD

The present invention relates to a mobile station and a radio base station.

### BACKGROUND ART

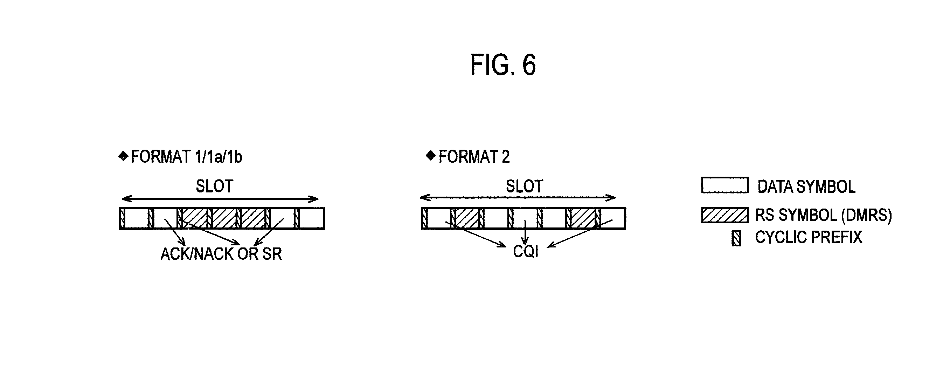

A PUCCH (Physical Uplink Control Channel) used in LTE (Long Term Evolution) is a control channel for transmitting control signals in an uplink. As illustrated in Fig. 6, the PUCCH is defined to transmit a CQI (Channel Quality Indicator) which is channel quality information, an ACK/NACK which is acknowledgement information for a data signal transmitted in a downlink, or a scheduling request (SR) which is transmitted when a data signal to be transmitted in the uplink is generated.

In LTE-Advanced, a mobile station UE is configured to be capable of performing CA (Carrier Aggregation) using multiple cells (or CC: Component Carriers).

When the CA is performed, a Pcell (Primary cell) which is a highly reliable cell guaranteeing connectivity and an Scell (Secondary cell) which is a supplementary cell are configured for a mobile station UE.

The mobile station UE firstly connects to the Pcell and then can add the Scell as needed.

The Pcell is a cell similar to an LTE cell which supports RLM (Radio Link Monitoring), SPS (Semi-Persistent Scheduling) and the like. When the mobile station UE changes the Pcell to another cell, handover processing is needed.

On the other hand, the Scell is a cell configured for the mobile station UE in addition to the Pcell. The Scell is added and deleted by RRC (Radio Resource Control) signaling.

The Scell is a cell which is in a deactive state just after being configured for the mobile station UE, and is enabled to perform communications (be schedulable) only after being activated in a MAC (Media Access Control) layer.

### PRIOR ART DOCUMENT

### NON-PATENT DOCUMENT

Non-patent document 1: 3GPP TS36.300

### SUMMARY OF THE INVENTION

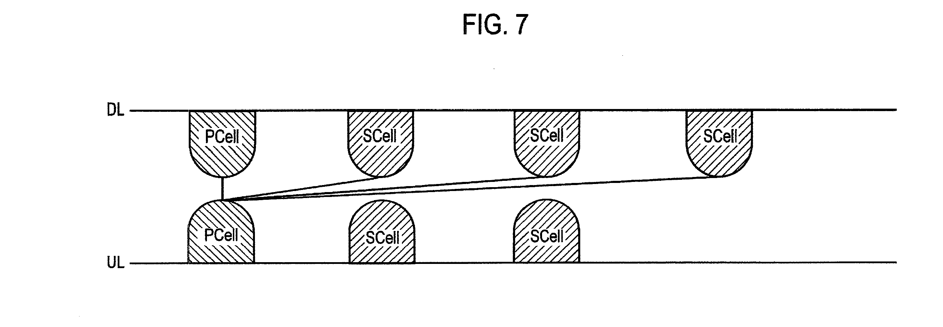

In the CA in LTE Release-11 and earlier, PUCCH is supported only by a Pcell. As illustrated in Fig. 7, all pieces of feedback information on a downlink are transmitted through the PUCCH in the Pcell.

However, the configuration where the PUCCH is transmitted only in a specific cell (Pcell) has a problem of shortage of PUCCH resource if a large number of mobile stations UE use the specific cell as the Pcell.

As one solution to the above problem, there exists a method in which the number of mobile stations UE connecting to a Pcell is limited for each cell (in other words, mobile stations UE beyond a predetermined number are caused to use another cell as a Pcell). However, when the Pcell is changed to another cell, a handover procedure is accompanied. Accordingly, this method is not preferable from the view point of control loads or the view point of user throughputs. For this reason, from the view point of load distribution of PUCCH, studies have been conducted for an Scell configured to also support PUCCH.

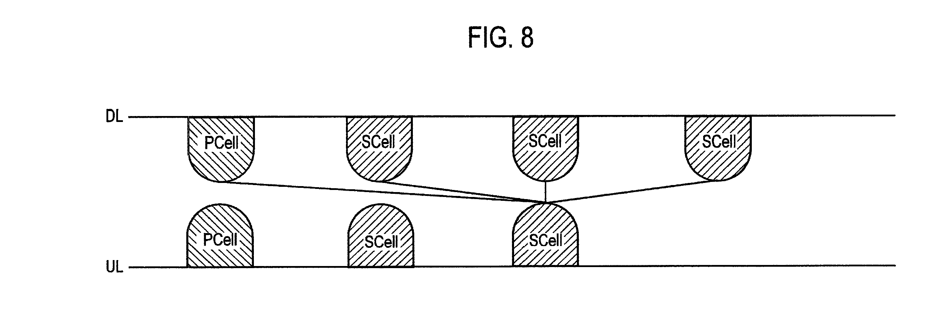

For example, as illustrated in Fig. 8, the PUCCH is supported by Scells, so that load distribution of PUCCH in Pcell can be achieved.

Also, in LTE Release-12 or beyond, it has been discussed to adopt "Inter-site CA" using CCs (cells) under different radio base stations eNB.

In the "inter-site CA," feedback information transmitted through PUCCH (such as CQI or ACK/NACK) is to be transmitted to a radio base station eNB which has performed the corresponding downlink transmission, and from that view point, PUCCH support by Scells has been studied as well.

Here, existing LTE has no mechanism for determining which downlink cell feedback information is to be transmitted through which uplink cell PUCCH. For this reason, even if PUCCH is supported both by a Pcell and an Scell, a mobile station UE cannot know through which uplink cell PUCCH the feedback information is to be transmitted. This is a problem.

Also, there is another problem that the radio base station eNB cannot know through which uplink cell PUCCH the feedback information is expected to be received.

Accordingly, the present invention has been made in view of the above problem, and an objective of the invention is to provide a mobile station and a radio base station, which are capable of determining which downlink cell feedback information is to be transmitted through which uplink cell PUCCH in CA performed using multiple cells supporting PUCCH.

A first feature of the present invention is summarized as a mobile station configured to be capable of performing carrier aggregation using multiple cells supporting a physical uplink control channel, the mobile station including: a management unit configured to manage a downlink cell and an uplink cell in association with each other; and a transmission unit configured to transmit feedback information for a signal, which is transmitted through the downlink cell, through a physical uplink control channel for the uplink cell associated with the downlink cell.

A second feature of the present invention is summarized as a radio base station capable of communicating with a mobile station configured to perform carrier aggregation using multiple cells supporting a physical uplink control channel, the radio base station including: a management unit configured to manage a downlink cell and an uplink cell in association with each other; and a reception unit configured to receive feedback information for a signal, which is transmitted through the downlink cell to the mobile station, through a physical uplink control channel for the uplink cell associated with the downlink cell.

A third feature of the present invention is summarized as a mobile station configured to be capable of performing carrier aggregation using multiple component carriers supporting a physical uplink control channel, the mobile station including: a transmission unit configured to notify a radio base station of the number of component carriers capable of supporting the physical uplink control channel.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a radio base station according to the first embodiment of the invention.
[Fig. 3] Fig. 3 is a diagram illustrating an example of an association between a downlink cell and an uplink cell in the mobile communication system according to the first embodiment of the invention.
[Fig. 4] Fig. 4 is a functional block diagram of a mobile station according to the first embodiment of the invention.
[Fig. 5] Fig. 5 is a flowchart illustrating an operation of the mobile station according to the first embodiment of the invention.
[Fig. 6] Fig. 6 is a diagram for illustrating a conventional art.
[Fig. 7] Fig. 7 is a diagram for illustrating a conventional art.
[Fig. 8] Fig. 8 is a diagram for illustrating a conventional art.

### MODE FOR CARRYING OUT THE INVENTION

### (Mobile communication system according to the first embodiment of the invention)

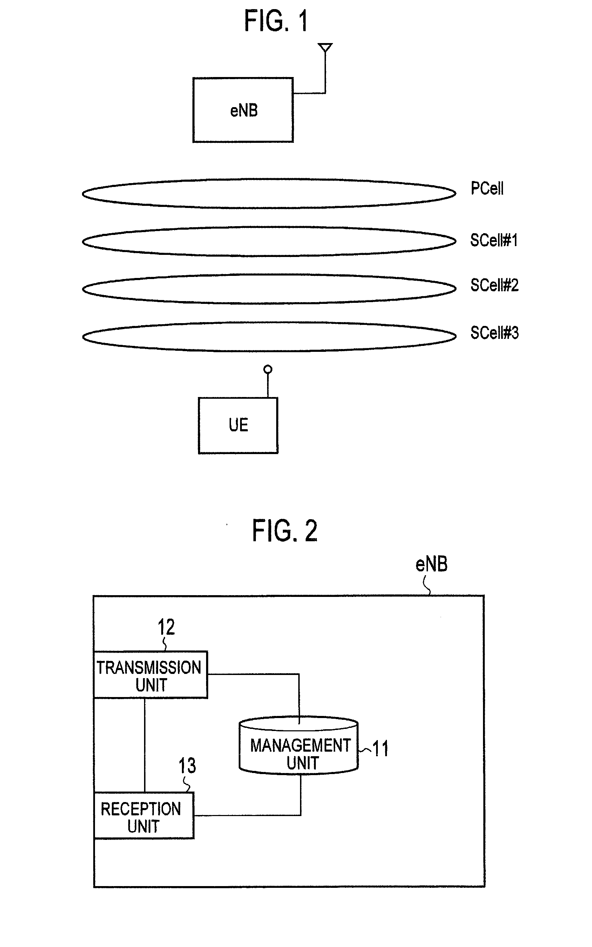

Described by referring Figs. 1 to 5 is a mobile communication system according to a first embodiment of the present invention.

As illustrated in Fig. 1, the mobile communication system according to the present embodiment is an LTE-Advanced mobile communication system, which includes a radio base station eNB managing a Pcell and Scell #1 to #3 and a mobile station UE.

Here, the Pcell and Scells #1 to #3 may be managed by multiple radio base stations eNB or may be managed by the same radio base station eNB.

In the mobile communication system according to the embodiment, the mobile station UE can perform CA using Pcell/Scell supporting PUCCH.

In other words, in the mobile communication system according to the embodiment, PUCCH is supported by both the Pcell and Scell.

As illustrated in Fig. 2, the radio base station eNB according to the embodiment includes a management unit 11, a transmission unit 12, and a reception unit 13.

The management unit 11 is configured to manage a downlink cell and an uplink cell, to which feedback information (such as CQI or ACK/NACK) for a signal transmitted through the downlink cell is to be transmitted, in association with each other.

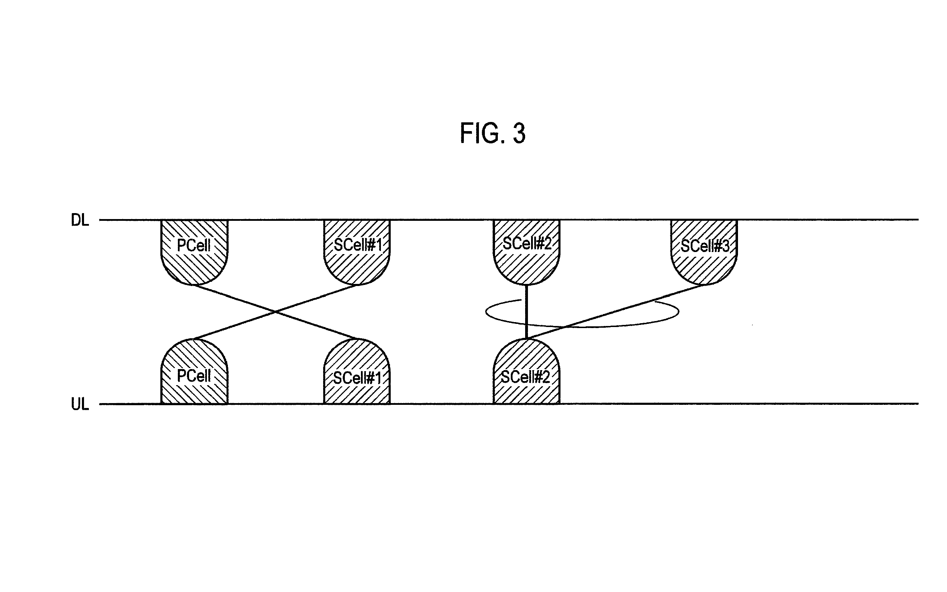

For example, as illustrated in Fig. 3, the management unit 11 performs management so as to associate a Pcell as a downlink cell with an Scell #1 as an uplink cell, associate an Scell #1 as a downlink cell with a Pcell as an uplink cell, and associate Scells #2/#3 as downlink cells with an Scell #2 as an uplink cell.

Here, the management unit 11 may manage the downlink cell and the uplink cell in association with each other for each mobile station UE.

Also, the management unit 11 may manage the downlink cell and the uplink cell in association with each other for each CC or each CC group.

Here, the CC group may be formed similarly to TAG in Multiple-TA, may be formed of CCs under a same radio base station eNB in case of "Inter-site CA," or may be formed for each band.

Also, the management unit 11 may manage the downlink cell and the uplink cell in association with each other for each of PUCCH types.

Here, the PUCCH types include PUCCH for transmitting CQI, PUCCH for transmitting ACK/NACK, PUCCH for transmitting SR, and the like.

Also, the management unit 11 may manage the Pcell as the downlink cell and manage the Scell as the uplink cell.

Moreover, the management unit 11 may manage the Scell as the downlink cell and manage Pcell as the uplink cell.

In addition, the management unit 11 may manage multiple downlink cells and one uplink cell in association with each other.

Furthermore, the management unit 11 may manage the downlink cell and PUCCH resource for the uplink cell in association with each other.

The transmission unit 12 is configured to transmit various kinds of signals to a mobile station UE within a cell under the radio base station eNB. The reception unit 13 is configured to receive various kinds of signals from the mobile station UE within the cell under the radio base station eNB.

Here, the transmission unit 12 may notify the mobile station UE within the cell under the radio base station eNB of a cell (Pcell or Scell) in which the PUCCH is to be set.

Also, the transmission unit 12 may notify the mobile station UE within the cell under radio base station eNB of the association between the downlink cell and the uplink cell.

For example, the transmission unit 12 may notify the cell in which PUCCH is to be set or information indicating the association in any layer of a RRC layer, PDCP (Packet Data Convergence Protocol) layer, RLC (Radio Link Control) layer, MAC layer, physical layer, and the like.

Also, the reception unit 13 receives the feedback information for a signal, which is transmitted by the transmission unit 12 to the mobile station UE through the downlink cell, through the PUCCH (or PUSCH (Physical Uplink Shared Chanel) if the feedback information is piggybacked to the PUSCH) for the uplink cell associated with the downlink cell.

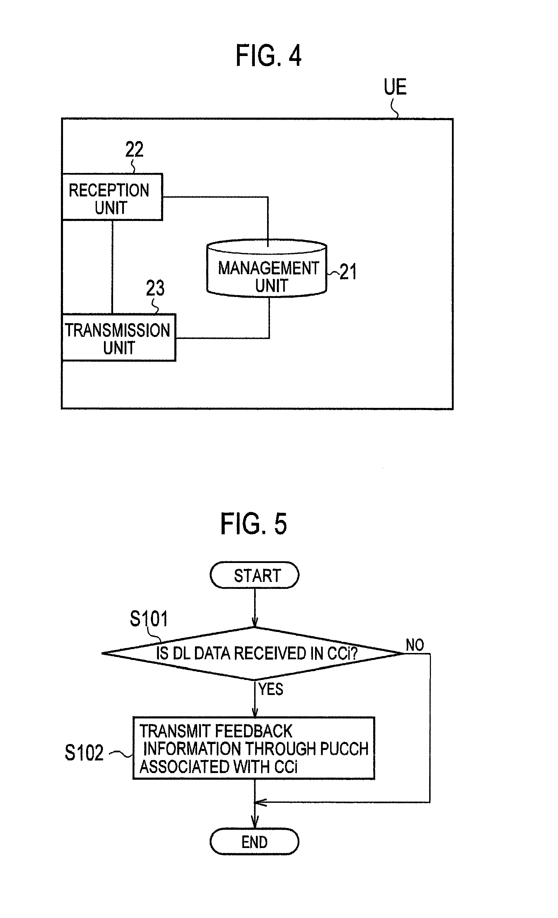

As illustrated in Fig. 4, the mobile station UE according to the embodiment includes a management unit 21, a reception unit 22, and a transmission unit 23.

As similar to the management unit 11 of the radio base station eNB, the management unit 21 is configured to manage a downlink cell and an uplink cell, to which feedback information for the signal transmitted through the downlink cell is to be transmitted, in association with each other.

For example, as illustrated in Fig. 3, the management unit 21 performs management so as to associate a Pcell as a downlink cell with an Scell #1 as an uplink cell, associate an Scell #1 as a downlink cell with an Scell #2 as an uplink cell, and associate Scells #2/#3 as downlink cells with an Scell #2 as an uplink cell.

Here, the management unit 21 may manage the downlink cell and the uplink cell in association with each other for each CC or each CC group.

For example, the management unit 21 may manage multiple downlink cells belonging to a same CC group and one uplink cell in association with each other.

Here, the CC group may be grouped similarly to TAG in Multiple-TA or in case of "Inter-site CA," may be grouped by a CC under a same radio base station eNB.

Also, the management unit 21 may perform CC grouping based on a multiplex mode.

In other words, the multiple CCs may be grouped into a FDD (Frequency Division Duplex) CC group and a TDD (Time Division Duplex) CC group, for example.

Also, the management unit 21 may manage the downlink cell and the uplink cell in association with each other for each type of PUCCH.

Here, the PUCCH types include PUCCH for transmitting CQI, PUCCH for transmitting ACK/NACK, PUCCH for transmitting SR, and the like.

Also, the management unit 21 may manage the Pcell as the downlink cell and manage the Scell as the uplink cell.

Moreover, the management unit 21 may manage the multiple link cells and one uplink cell in association with each other.

Furthermore, the management unit 21 may manage the downlink cell and PUCCH resource for the uplink cell in association with each other.

The reception unit 22 is configured to receive various kinds of signals from the radio base station. The transmission unit 23 is configured to transmit various kinds of signals to the radio base station eNB.

For example, the reception unit 22 acquires information indicating the association between the downlink cell and the uplink cell from the radio base station eNB and transmits the information to the management unit 21.

In addition, the transmission unit 23 transmits the feedback information for the signal, which is transmitted through the downlink cell to the radio base station eNB, through the PUCCH (or PUSCH (Physical Uplink Shared Chanel) if the feedback information is piggybacked to the PUSCH) for the uplink cell associated with the downlink cell.

Also, the transmission unit 23 transmits the feedback information for the signal, which is transmitted through the down link cell not associated with the uplink cell, through PUCCH (or PUSCH if the feedback information is piggybacked to the PUSCH) of a predetermined cell (default cell).

Described hereinafter by referring to Fig. 5 is an operation of the mobile station UE according to the embodiment.

As illustrated in Fig. 5, when a signal is received through CCi (i.e., a cell #i) at step S101, at step S102, the mobile station UE transmits the feedback information for the signal through the PUCCH (or PUSCH if the feedback information is piggybacked to the PUSCH) of the uplink cell associated with the CCi (in other words, the cell #i).

### (Modification 1)

A mobile communication system according Modification 1 of the invention is described below by paying attention to differences with the mobile communication system according to the first embodiment.

A transmission unit 23 of a mobile station UE according to Modification 1 is configured to notify a radio base station eNB of capacity information indicating the number of CCs (or cells) capable of supporting PUCCH. Here, the number of CCs (or cells) depends on a capacity of the mobile station UE.

Here, the transmission unit 23 may notify the capacity information for each PUCCH type.

In addition, the transmission unit 23 may notify the capacity information in association with "CA capacity."

Moreover, the transmission unit 23 may notify the capacity information for each "CA band combination."

Also, the transmission unit 23 may notify the capacity information for each band.

Also, the transmission unit 23 may notify the capacity information for each radio function unit.

Furthermore, the transmission unit 23 may notify the capacity information in association with "Multiple-TA capacity."

In addition, a management unit 11 of a radio base station eNB according to Modification 1 may determine the number of CCs (or cells) which is to support PUCCH based on the capacity information.

The features of the present embodiment may also be expressed as follows.

A first feature of the present embodiment is summarized as a mobile station UE configured to be capable of performing CA (carrier aggregation) using Pcell/Scell (multiple cells) supporting a PUCCH (physical downlink control channel), the mobile station UE including: a management unit 21 configured to manage a downlink cell and an uplink cell in association with each other; and a transmission unit 23 configured to transmit feedback information for a signal, which is transmitted through the downlink cell, through a PUCCH for the uplink cell associated with the downlink cell.

With the above-described configuration, in CA performed using the multiple cells supporting PUCCH, the uplink cell to which the feedback information for the signal transmitted through the downlink cell is to be transmitted can be easily identified.

The first feature of the present embodiment, the management unit 21 may manage the downlink cell and the uplink cell in association with each other for each CC (component carrier) or for each CC group (component carrier group).

Here, the management 21 may perform CC grouping based on the multiplex mode.

With the above-described configuration, when CA is performed across different radio base stations eNB, the feedback information can be transmitted to the radio base station eNB which has performed the corresponding downlink transmission.

The first feature of the present embodiment, the management unit 21 may manage the downlink cell and the uplink cell in association with each other for each type of the PUCCH.

With the above-described configuration, in CA performed by using multiple cells supporting the PUCCH, load distribution can be performed only for a PUCCH type which needs the distribution. Thus, a resource utilization efficiency can be increased.

The first feature of the present embodiment, the management unit 21 may manage a Pcell (primary cell) as the downlink cell and manages an Scell (secondary cell) as the uplink cell.

With the above-described configuration, the load distribution of PUCCH in the Pcell can be achieved in CA performed using the multiple cells supporting the PUCCH.

The first feature of the present embodiment, the transmission unit 23 may transmit feedback information for a signal, which is transmitted through a downlink cell not associated with any uplink cell, through a PUCCH of a predetermined cell (or PUSCH if the feedback information is piggybacked to the PUSCH).

With the above-described configuration, even when there is no uplink cell associated with a downlink cell, the uplink cell to which the feedback information for the signal transmitted through the downlink cell is to be transmitted can be identified.

The first feature of the present embodiment, the management unit 21 may manage multiple downlink cells and one uplink cell in association with each other.

With the above-described configuration, even when a small number of the uplink cells (Scells) support PUCCH, the feedback information can be transmitted.

The first feature of the present embodiment, the management unit 21 may manage the downlink cell and PUCCH resource for the uplink cell in association with each other.

With the above-described configuration, the PUCCH load distribution can be more flexibly achieved by identifying PUCCH for an uplink cell through which the feedback information for the signal transmitted through the downlink cell is to be transmitted.

A second feature of the present embodiment is summarized as a radio base station eNB capable of communicating with a mobile station UE configured to perform CA using Pcell/Scell supporting a PUCCH, the radio base station eNB including: a management unit 11 configured to manage a downlink cell and an uplink cell in association with each other; and a reception unit 13 configured to receive feedback information for a signal, which is transmitted through the downlink cell to the mobile station UE, through a PUCCH for the uplink cell associated with the downlink cell.

A third feature of the present embodiment is summarized as a mobile station UE configured to be capable of performing CA using multiple CCs supporting a PUCCH, the mobile station UE including: a transmission unit 23 configured to notify a radio base station eNB of the number of CCs (or cells) capable of supporting the PUCCH.

With the above-described configuration, the radio base station eNB determines the number of CCs (or cells) which are to support PUCCH based on the number of the CCs (or cells).

It should be noted that the foregoing operations of the mobile stations UE and the radio base station eNB may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile stations UE and the radio base station eNB. Otherwise, the storage medium and the processor may be provided as discrete components inside the mobile stations UE and the radio base station eNB.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire contents of Japanese Patent Application No. 2012-222251 (filed on October 4, 2012) and Japanese Patent Application No. 2013-023464 (filed on February 8, 2013) are incorporated by reference in the present specification.

### INDUSTRIAL APPLICABILITY

As described above, the present invention can provide a mobile station and a radio base station capable of determining which downlink cell feedback information is to be transmitted through which uplink cell PUCCH in CA performed using multiple cells supporting PUCCH.

### EXPLANATION OF REFERENCE NUMERALS

- eNB: radio base station
- UE: mobile station
- 11, 21: management unit
- 12, 23: transmission unit
- 13, 22: reception unit

## Claims

1. A mobile station configured to be capable of performing carrier aggregation using a plurality of cells supporting a physical uplink control channel, the mobile station comprising:
a management unit configured to manage a downlink cell and an uplink cell in association with each other; and
a transmission unit configured to transmit feedback information for a signal, which is transmitted through the downlink cell, through a physical uplink control channel for the uplink cell associated with the downlink cell.

2. The mobile station according to claim 1, wherein the management unit manages the downlink cell and the uplink cell in association with each other for each component carrier or for each component carrier group.

3. The mobile station according to claim 1, wherein the management unit manages the downlink cell and the uplink cell in association with each other for each type of the physical uplink control channel.

4. The mobile station according to claim 1, wherein the management unit manages a primary cell as the downlink cell and manages a secondary cell as the uplink cell.

5. The mobile station according to claim 1, wherein the transmission unit transmits feedback information for a signal, which is transmitted through a downlink cell not associated with any uplink cell, through a physical uplink control channel of a predetermined cell.

6. The mobile station according to claim 1, wherein the management unit manages a plurality of downlink cells and one uplink cell in association with each other.

7. The mobile station according to claim 1, wherein the management unit manages the downlink cell and physical uplink control channel resource for the uplink cell in association with each other.

8. A radio base station capable of communicating with a mobile station configured to perform carrier aggregation using a plurality of cells supporting a physical uplink control channel, the radio base station comprising:
a management unit configured to manage a downlink cell and an uplink cell in association with each other; and
a reception unit configured to receive feedback information for a signal, which is transmitted through the downlink cell to the mobile station, through a physical uplink control channel for the uplink cell associated with the downlink cell.

9. A mobile station configured to be capable of performing carrier aggregation using a plurality of component carriers supporting a physical uplink control channel, the mobile station comprising:
a transmission unit configured to notify a radio base station of the number of component carriers capable of supporting the physical uplink control channel.

10. The mobile station according to claim 2, wherein the management unit performs grouping on the component carriers based on a multiplex mode.
